# EUROPEAN PATENT APPLICATION

(11) **EP 4 841 149 A1**
(43) Date of publication of application: **18.11.2026**
(21) Application number: 25176684.6
(22) Date of filing: 15.05.2025
(51) Int. Cl.: F16M 11/10, F16M 13/02, H04N 5/64, H04R 1/02

(54) **TABLE AND WALL BRACKET FOR AV SYSTEM**

(71) Applicant: BANG & OLUFSEN A/S, 7600 Struer (DK)
(72) Inventor: Graabæk, Jakob Bergstrøm, 7600 Struer (DK)
(74) Representative: Patrade A/S

(57) **Abstract**

The present invention discloses an AV-bracket (10) for arranging an AV system (2) either on a substantially horizontal surface (1') or on a substantially vertical surface (1"), where said AV-bracket (10) comprises a chassis plate (12) having a front side (14) and a back side (16), said back side (16) in use intended to be facing the substantially horizontal surface (1') or the substantially vertical surface (1"), where on the front side (14) of the chassis plate (12) is provided at least one console (18) having a hinge connection (20) with an interface member (22), which interface member (22) has means (24) for engaging and holding an the AV-system (2). The invention further discloses a method of mounting an AV-system in an AV-bracket.

## Description

### Field of the Invention

The present invention is directed to an AV-bracket as well as a method of using such a bracket.

### Background of the Invention

It is known in the art to provide mounting brackets for various AV components. For example, for screens it is usually possible to both have a wall mounted bracket with various features such as for example the ability to turn and move the screen off the wall etc., and a table bracket, suitable to arrange the screen on a table, floor or the like.

The present applicant has over the years developed and presented a number of brackets, floor stands and purpose-built wall brackets. These have all had special and distinguishing advantages relating to the specific AV equipment to which they were developed to provide a mounting for.

However, for these mounting brackets it was necessary to have a specific stand for floor mounting and another stand for wall mounting. This implies some drawbacks. For example, if over time the user changes the interior design planning such that it may be better to have the AV-equipment hanging instead of being arranged in a floor or table stand, it will be necessary to acquire the necessary wall bracket. Depending on how much time has lapsed since the purchase of the AV-equipment, it may be more or less difficult to obtain the proper wall bracket. Also, the wall bracket represents an additional cost as it is a separate unit. The same problems apply the other way around, i.e. changing the arrangement of the AV-equipment from wall mounted to table/floor mounted. This challenge may result in the user not arranging the AV-equipment in the most desirable position, resulting in a non-optimal listening and/or viewing experience.

Therefore, there appears to be a need for a mounting bracket which may be used in both situations, i.e. when floor/table mounting or wall mounting AV - equipment.

### Object of the Invention

The present invention addresses this need by providing an AV-bracket for arranging an AV system either on a substantially horizontal surface or on a substantially vertical surface, where said AV-bracket comprises a chassis plate having a front side and a back side, said back side in use intended to be facing the substantially horizontal surface or the substantially vertical surface, where on the front side of the chassis plate is provided at least one console having a hinge connection with an interface member, which interface member has means for engaging and holding an the AV-system.

### Description of the Invention

In this manner by providing a pivotable interface member hingely connected to a console and thereby to the chassis plate, it is possible to pivot the interface member such that it may be orientated correctly, whether the chassis plate is attached to a vertical surface (such as a wall) or a horizontal surface (such as a floor or table). As it is the same means on the interface member designed to engage the AV system, it is the orientation of the interface member relative to the chassis plate which determines if it is suitable for wall mounting or for placement on a horizontal surface.

At least within the present description, AV-equipment shall be understood as any type of audio or video equipment such as but not limited to flat (tv) screens, soundbars, loudspeakers, audio or video control centers, sub-woofers, tuners, etc.

Furthermore, it is understood that wired as well as wireless AV-equipment/systems may be used with the present AV-bracket.

In a further advantageous embodiment, the interface member can pivot 90° +/- 5° around the hinge connection. This pivotal range makes it possible to "convert" the bracket to be suitable for being placed on two perpendicular surfaces, i.e. a wall or a floor/table.

In a still further advantageous embodiment, the hinge connection defines an axis parallel to the front side of the chassis plate around which the interface member turns relative to the chassis plate, and where said axis is distanced from the front side of the chassis plate by a distance x, where x is selected such that in use, the AV-system is distanced from the front side of the chassis plate. This embodiment is particularly useful when the AV-system is to be mounted on a vertical surface, as the distance x leaves a little space for wires and cables etc. However, also for AV-systems mounted on a table/floor, the distance x elevates the AV-system relative to the surface. Furthermore, the distance x leaves space for a cover plate to be positioned covering the chassis plate - see further embodiments below.

In an advantageous embodiment, two consoles are provided on the chassis plate with a mutual distance, each console being provided with a hinge connection with an interface member, which interface member has means for engaging and holding the AV-system. The provision of two consoles and two hinge connections spaced from each other but having the same axis of rotation provides for a more stable engagement with an AV-system, and the possibility to mount larger/longer AV-equipment in the AV-bracket.

In a further embodiment of the invention, a releasable locking mechanism is provided between the interface member and the console, such that when the locking mechanism is engaged, the interface member cannot pivot relative to the chassis plate and when the locking mechanism is released, the interface member may pivot relative to the chassis plate.

As the AV-system often is both relatively heavy and expensive, it is an advantage to be able to lock it in place, such that the AV-system not by mistake suddenly pivots and may thereby accidently hit a surface and cause damage to the AV-system or the surface. The bracket is designed such that when the locking mechanism is engaged, the overall assembly, i.e. AV-system and AV-bracket, is in a rest position and cannot inadvertently rotate.

In a still further advantageous embodiment, an adjustment mechanism is provided, where a threaded bolt is arranged in a correspondingly threaded aperture in the console, where said bolt has an end with a bolt head accessible from the surface of the console and an opposite distal end of the bolt engaging the interface member, such that rotation of the bolt causes the interface member to pivot in the hinge connection, and where the adjustment mechanism is limited to allow the interface member a pivot movement of +/- 5°.

In practice, walls or vertical surfaces may not be exactly vertical, and therefore by providing an adjustment mechanism which may be used to very finely and precisely adjust the mounted AV-system to the desired angle, for example such that at least the front of the AV-system is exactly vertical, provides advantages for the user.

In another advantageous embodiment, a locking mechanism is provided between the console and the interface member, where said locking mechanism comprises a pivotable locking member urged by resilient means into a locked position where the interface member cannot pivot relative to the console and a free position, where the pivotable locking member is brought into the free position by sliding a button accessible from the console into the free position, in which position the interface member may pivot relative to the console. It is clear that this locking mechanism provides extra security such that unwanted/undesired pivoting of an AV-system relative to the bracket does not occur.

In an advantageous embodiment, a combined locking and adjustment mechanism is provided, where the interface member is provided with an opening, and a locking member having a notch is pivotably mounted on a plate via a first axle, such that the notch may be pivoted into the opening or out of the opening, said locking member is connected to a button accessible from the outside, and the locking member is further rotatably mounted about the first axle on the plate, further the plate is rotatably mounted about a second axle and further, the plate is connected by a threaded engagement to the bolt such that by rotating the bolt, the plate will pivot around the second axle.

Further, a spring may be arranged between the locking member and chassis plate, urging the notch into the opening.

In a still further advantageous embodiment, a cover plate is provided, said cover plate being adapted to cover the chassis plate, where in use, the cover plate is detachably connected to the chassis plate. As the chassis plate is exposed showing wiring, cables, apertures, wall bracket, bolt heads etc., it is advantageous to provide a cover plate which covers all these elements and thereby provides a clean design. The cover plate may be provided with a desirable surface, and furthermore a number of different surface textures and colors may be available such that a user may select the most suitable design with respect to the interior design and the AV-system.

In a still further advantageous embodiment of the invention, a wall bracket is provided, said wall bracket having a wall bracket front side and a wall bracket rear side, which wall bracket rear side in use is intended for being in contact with the substantially vertical surface, where the wall bracket has two flanges extending from the wall bracket front side, in use intended to be extending away from the substantially vertical surface, and where the wall bracket has a plurality of apertures for allowing screws/bolts to pass through the apertures for fastening of the wall bracket to the substantially vertical surface.

During mounting of the AV-system, the wall bracket is a great help. The wall bracket may be installed independently of the rest of the system, such that the installation of the wall bracket can be carried out very precisely and quickly. Once the wall bracket is correctly placed (at the right height and level), the chassis plate may easily be mounted on the wall bracket. This is done by inserting the flanges of the wall bracket inter-fitting with openings in the chassis plate, and where optionally one or more releasable engagement locks is/are provided, releasably locking the chassis plate to the wall bracket. At this point the AV-system may be arranged on the chassis plate for final mounting. The cover plate may be mounted either before the AV-system is in place or after the AV-system is in place.

The wall bracket is only used when mounting an AV-system to a vertical surface. The chassis plate and the wall bracket are, in an advantageous embodiment, designed such that the wall bracket may be integrated/mounted in the chassis plate in a sort of storage position. The wall bracket is stored in the chassis plate when the AV-bracket is used as a floor or table stand (i.e. on a substantially horizontal surface).

The invention is also directed to an AV-system comprising a soundbar and/or a screen, where said soundbar and/or screen has a soundbar or screen front side, a soundbar or screen rear side, a soundbar or screen top side, and a soundbar or screen lower side, and where a soundbar or screen engagement surface is provided between and connecting the soundbar or screen rear side and the soundbar or screen lower side, said soundbar or screen engagement surface arranged at an angle of 45° with respect to the soundbar or screen lower side and the soundbar or screen rear side, and where means for receiving the means for engaging and for holding the AV-system are provided on the interface member as discussed above.

Advantageously, two recesses are provided in the soundbar or screen engagement surface where further apertures are positioned in the recesses where the recesses are spaced along the soundbar or screen engagement surface adapted to receive and hold the means for engaging and holding the AV-system such that the interface member is at least partly submerged in the recesses.

Still further, the invention also discloses a method of mounting an AV-system in an AV-bracket as described in detail above and below, where:
a) in a first situation, the AV-system is to be arranged on a substantially vertical surface the following method steps are carried out:
   1. The wall bracket is fastened to the substantially vertical surface by means of bolts or screws, such that the flanges are level and extending away from the substantially vertical surface;
   2. connecting the means for engaging and holding the AV-system with the soundbar or screen engagement surface;
   3. The chassis plate is fitted on the wall bracket by passing the openings over the flanges allowing upper rims of the openings to engage the flanges;
   4. optionally pivoting the AV-system into the correct position relative to the substantially vertical surface and, if necessary, adjusting the correct position by engaging the threaded bolt, finely adjusting the interface member relative to the consoles;
b) in a second situation the AV-system is to be arranged on a substantially horizontal surface the following method steps are carried out:
   1. connecting the means for engaging and holding the AV-system with the soundbar or screen engagement surface;
   2. the chassis plate is arranged on the substantially horizontal surface, (such that the means for engaging and holding the AV-system points upwards);
   3. if necessary, adjusting the correct position by engaging the threaded bolt, finely adjusting the interface member relative to the consoles.

A further variation of the method provides that prior to step a)3. or b)2., the interface member is pivoted into a position where the rear side of the interface member is accessible in order for connecting the means for engaging and holding the AV-system with the soundbar or screen engagement surface.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Fig. 1 illustrates an "exploded view" of the AV-bracket (10) according to the invention;
Fig. 2a illustrates the AV-bracket (10) arranged on a substantially vertical surface;
Fig. 2b illustrates the AV system in fig. 2a pivoted around the hinges in order to provide access to the back side of the AV system.
Fig. 3 illustrates the AV-bracket (10) arranged on a substantially horizontal surface;
Fig. 4 illustrates a pivoting locking member construction;
Fig. 5 illustrates an integrated/combined locking and adjustment system
Fig. 6 illustrates the construction of an integrated/combined locking and adjustment system
Fig. 7 illustrates two recesses provided in an AV system for engagement with the interface members
Fig. 8 illustrates the chassis plate arranged on the wall bracket.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

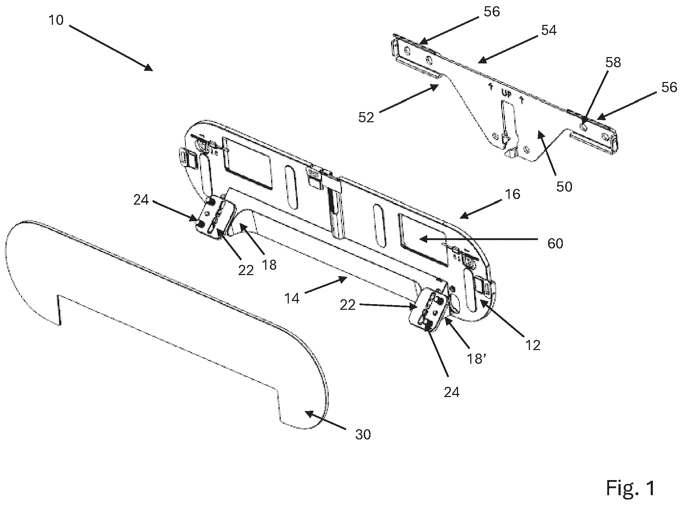

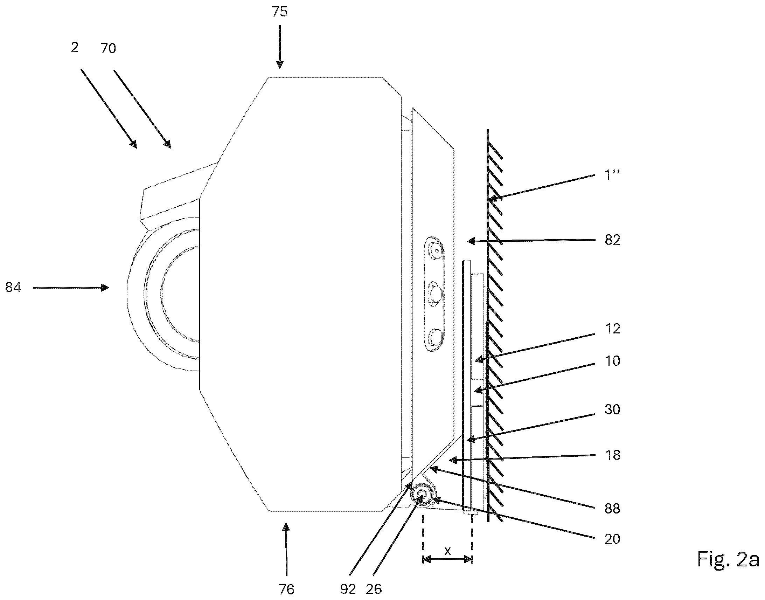

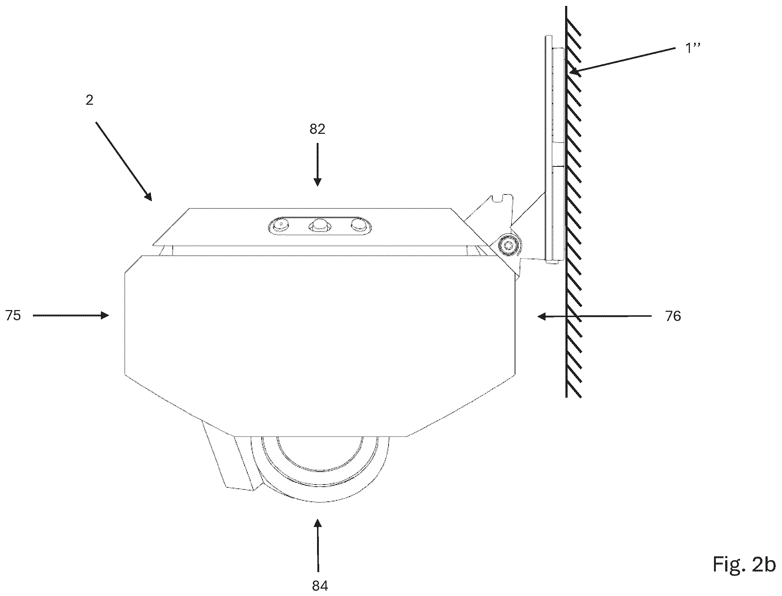

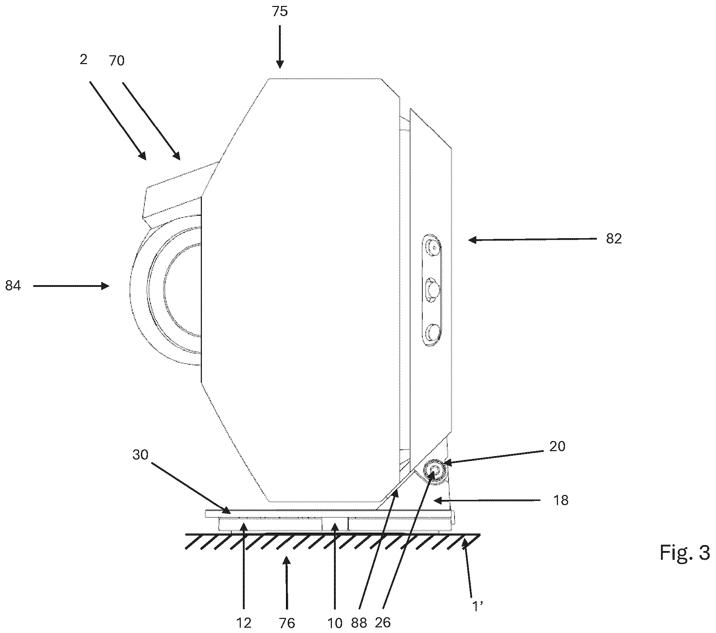

In fig. 1 an AV-bracket (10) according to the invention is illustrated. The AV-bracket (10) is suitable for arranging an AV system (2) (see figs. 2a, 2b and 3) either on a substantially horizontal surface (1') as illustrated in fig. 3, or on a substantially vertical surface (1") as illustrated in fig. 2a. The AV-bracket (10) comprises a chassis plate (12) having a front side (14) and a back side (16). The back side (16) is in use intended to be facing either the substantially horizontal surface (1') or the substantially vertical surface (1"). The front side (14) of the chassis plate (12) is provided with at least one console (18). In the embodiment illustrated in the figures, two consoles (18,18') are provided. Each console has a hinge connection (20) (see figs. 2a and 3) with an interface member (22) (see fig. 1), which interface member (22) has means (24) for engaging and holding the AV-system (2). In this exploded view (see fig. 1) also a wall bracket (50) is illustrated. This will be described further below. Further, a cover plate (30) is also illustrated.

As illustrated with reference to figs. 2a and 3, the hinge connection (20) defines an axis (26) parallel to the front side (14) of the chassis plate (12) around which the interface member (22) turns relative to the chassis plate (12). Either when mounting or when an AV system (2) is mounted on the bracket, it is possible to pivot the AV system (2) relative to the chassis plate (12). This is particularly important when the chassis plate (12) is mounted on a substantially vertical surface (1"), such as for example a wall. By being able to pivot the AV system (2) away from the wall the rear side (82) of the AV system (2) is made accessible (as illustrated with reference to fig. 2b). The rear side (82) is typically where power cables, loudspeaker cables etc. are connected. It is therefore possible to connect these in a simple manner. Furthermore, a cover plate (30) may be provided either for covering the chassis plate (12) or covering the wire/cable connections on the rear side (82) of the AV system (2). This provides for a clean and neat design of the finished AV installation.

As illustrated with reference to fig. 2a, the axis (26) is distanced from the front side (14) of the chassis plate (12) by a distance x, where x is selected such that in use, the AV-system (2) is distanced from the front side (14) of the chassis plate (12). This distance leaves space for a cover plate (30) and for any wiring and cables. Also, as will be explained further below it leaves space for fine adjustment of the AV system (2) relative to the substantially vertical surface (1").

As depicted in fig. 2b the AV-system (2) may be pivoted approx. 90 degrees into the position illustrated.

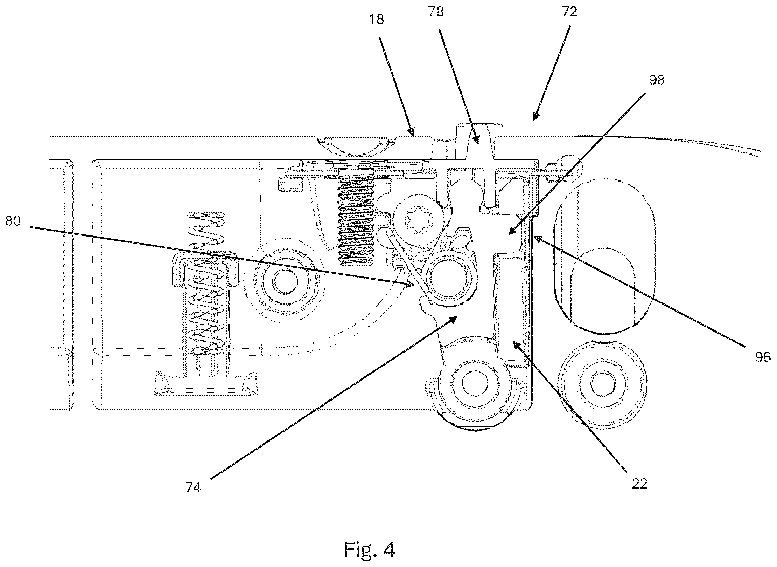

In order to maintain the AV system (2) in the desired position such that it does not inadvertently pivot, the AV-bracket (10) may be provided with a releasable locking mechanism (72), see fig. 4, provided between the interface member (22) and the console (18), such that when the locking mechanism (72) is engaged, the interface member (22) cannot pivot relative to the chassis plate (12) and when the locking mechanism (72) is released, the interface member (22) may pivot relative to the chassis plate (12).

The AV-bracket (10) may also be provided with an adjustment mechanism. In some instances, the substantially vertical surface (1") - for example a wall - may not be exactly vertical, and it may therefore be desirable to be able to finely adjust the AV-system's angle precisely. This is of course most pertinent with screens but also for some sound systems where the design is very "strict" and where it may be desirable to arrange the system exactly vertically.

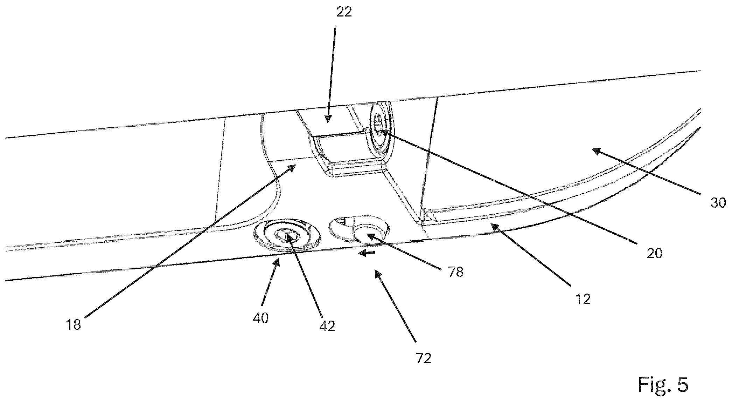

The adjustment mechanism may in one embodiment as illustrated in fig. 5 comprise a threaded bolt (40) arranged in a correspondingly threaded aperture in the console (18). The bolt (40) has an end with a bolt head (42) accessible from the surface of the console (18) and an opposite distal end of the bolt (40) engaging the interface member (22), such that rotation of the bolt (40) causes the interface member (22) to pivot in the hinge connection (20). The pivotal action will change the orientation of the interface member (22) and therefore the AV system (2) relative to the surface. Typically, the adjustment mechanism is limited to allow the interface member (22) a pivot movement of +/- 5°.

Additionally, as illustrated in fig. 4, a locking mechanism (72) may be provided between the console (18) and the interface member (22). The locking mechanism (72) serves to lock the bracket and thereby hinder the AV system/equipment in inadvertently pivot around the hinges and come out of its proper position. This pivotal action may also damage the AV system (2) if it hits the wall or table. In its simplest form the locking mechanism (72) comprises a pivotable locking member (74) urged by resilient means (80) into a locked position where the interface member (22) cannot pivot relative to the console (18). The locking mechanism (72) may also be in a free position, where the pivotable locking member (74) is brought into the free position by sliding a button (78) accessible from the console (18) into the free position, in which position the interface member (22) may pivot relative to the console (18).

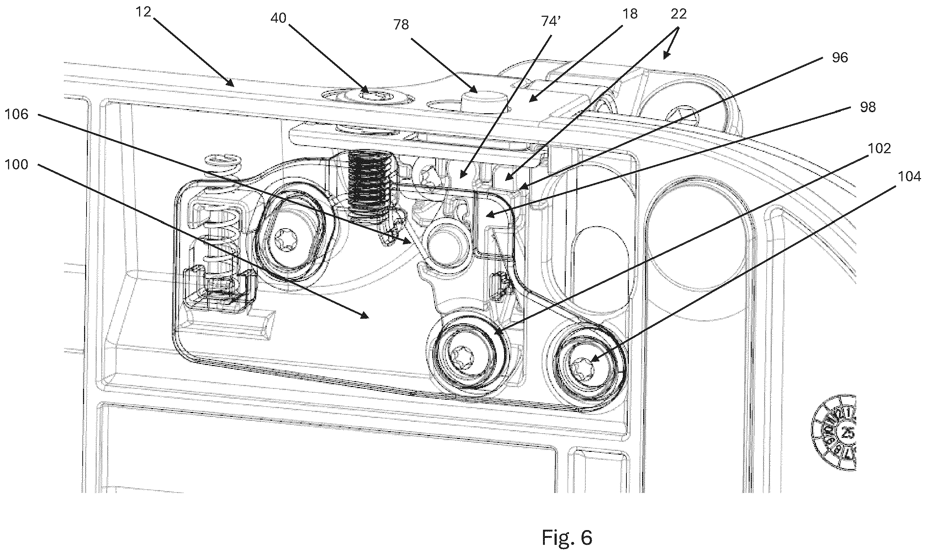

The locking mechanism and the adjustment mechanism may also be an integrated/combined system as illustrated in figs. 4 and 6. The combined locking and adjustment mechanism is provided, by providing the interface member (22) with an opening (96). A separate locking member (74') having a notch (98) is pivotably mounted on a plate (100) via a first axle (102), such that the notch (98) may be pivoted into the opening (96) or out of the opening (96). When the notch (98) is in the opening, the two parts i.e. the interface member (22) and the console (18) are locked relative to each other. In this connection it is foreseen that the notch (98) has a substantially tight fit with the opening (96) in order to avoid play. The notch (98) may be provided with reeded or chamfered edges as may the edges of the opening (96) in the interface member (22), in order to facilitate a smooth entrance of the notch (98) into and out of the opening (96). The locking member (74') is connected to a button (78) accessible from the outside and further a spring (106) is arranged between the locking member (74') and the chassis plate (12), urging the notch (98) into the opening (96). The locking member (74') is further rotatably mounted about the first axle (102) on the plate (100) and further the plate (100) is rotatably mounted about a second axle (104). The plate (100) is connected by a threaded engagement to the bolt (40) such that by rotating the bolt (40) the plate (100) will pivot around the second axle (104) and thereby displace the opening (96) and the notch (98) and facilitate the adjustment of the interface member (22) relative to the console (18).

As illustrated in figs. 1 and 3, a cover plate (30) may be provided. The cover plate (30) is adapted and designed to cover the chassis plate (12). In this manner a number of advantages may be achieved. Firstly, the appearance of the chassis plate (12) is concealed by the appearance of the cover plate (30). As the cover plate (30) has no technical functionality, it may be designed to enhance the appearance of the overall AV system (2). Furthermore, the cover plate (30) may be made from any desired material, and for example have a brushed stainless or aluminum surface, a desired color etc. The cover plate (30) is detachably connected to the chassis plate (12), and does therefore provide easy access to the chassis plate (12) without any special tools etc. The cover plate (30) will be the visible part of the AV-bracket and will enhance the overall appearance.

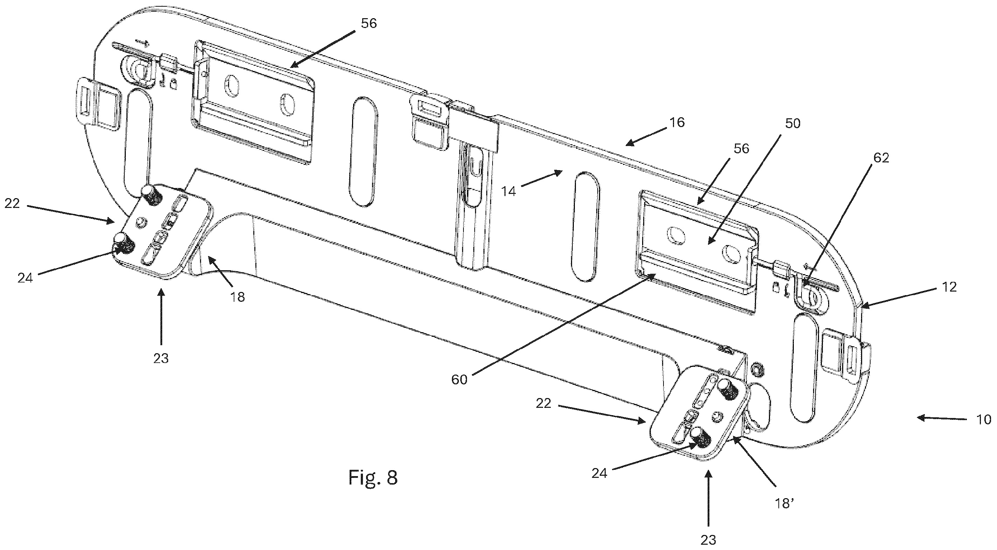

Particularly, where the AV-bracket (10) is used to mount an AV system (2) on a vertical surface, a wall bracket (50) is provided, see figs. 1 and 8. The wall bracket (50) has a wall bracket front side (52) and a wall bracket rear side (54), which wall bracket rear side (54) in use is intended for being in contact with the substantially vertical surface (1"). The wall bracket (50) has two flanges (56) extending from and a small distance away from the wall bracket front side (52). When mounting the wall bracket (50) on a vertical surface, the flanges (56) are intended to be extending away from the substantially vertical surface (1"). The flanges (56) of the wall bracket (50) are designed to inter-fit with openings (60) in the chassis plate (12), see fig. 8. In this manner the wall bracket (50) may be fastened to the wall without any other features of the invention being in the way. It is easy to assure correct level mounting of the wall bracket (50) which in turn will provide for correct level mounting of the AV-system (2) as the flanges (56) will serve to support the upper rim of the openings (60) provided in the chassis plate (12).

Further, the wall bracket (50) has a plurality of apertures (58) allowing screws/bolts to pass through the apertures (58) for fastening of the wall bracket (50) to the substantially vertical surface (1"). Furthermore, the wall bracket (50) may be provided with guide means for guiding and holding any cables and the like being prepared for mounting the AV system (2). The wall bracket (50) is furthermore designed such that it will fit with the chassis plate (12) in such a manner that the cover plate (30) covers both the chassis plate (12) and the wall bracket (50). This means that once the installation is completed only the cover plate (30) is visible, both for the installation on a substantially vertical surface (1") but also for the installation on a substantially horizontal surface (1').

The AV-bracket (10) as illustrated in fig. 8 and as described above, is designed to allow an AV-system (2) to be mounted on the AV-bracket (10) which in turn facilitates the mounting either on a substantially vertical surface (1") or on a substantially horizontal surface (1'). The AV-system (2), see fig. 2a, may comprise a soundbar (70) and/or screen, where said soundbar (70) and/or screen has a soundbar or screen front side (84), a soundbar or screen rear side (82), a soundbar or screen top side (75), and a soundbar or screen lower side (76), and where a soundbar or screen engagement surface (88) is provided between and connecting the soundbar or screen rear side (82) and the soundbar or screen lower side (76).

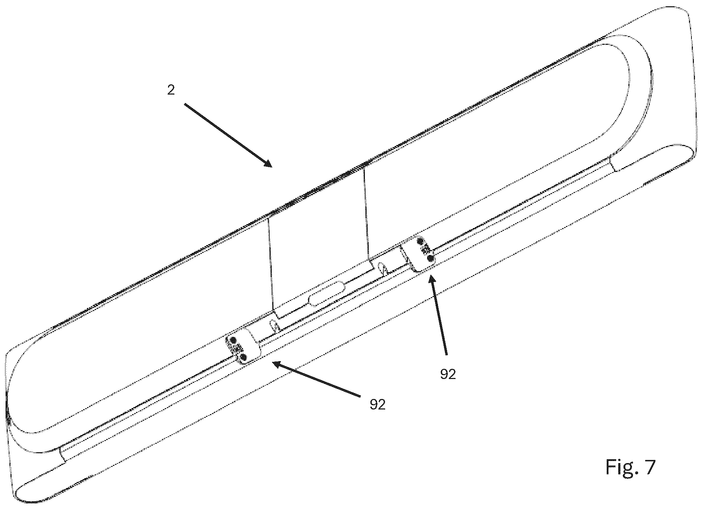

The soundbar or screen engagement surface (88) is arranged at an angle of 45° with respect to the soundbar or screen lower side (76) and the soundbar or screen rear side (82). In the engagement surface (88) means is provided for receiving the means (24) for engaging and holding the AV-system (2) provided on an interface member (22). In one particular embodiment, the engagement surface (88) is provided with recesses (92). The recesses (92), also illustrated in fig. 7 geometrically correspond to the interface members (22) such that the interface members (22) are inserted into the recesses (92). Furthermore, threaded holes are provided such that bolts may be used to fasten the interface members (22) - and thereby the AV-bracket (10) to the AV-system (2).

When mounting an AV-system in an AV-bracket as described above, the assembly steps are substantially identical with only slight differences when mounting on a vertical surface or on a horizontal surface.

When the AV-system (2) is to be arranged on a substantially vertical surface (1") the following method steps are carried out:
Firstly, the wall bracket (50) is fastened to the substantially vertical surface (1") by means of bolts or screws, such that the flanges (56) are level and extending away from the substantially vertical surface (1"). Typically, a spirit level will be used to ensure that the wall bracket (50) is mounted exactly level.

Secondly, connecting the means (24) for engaging and holding the AV-system (2) with the soundbar or screen engagement surface (88). At this stage the AV-system may be positioned such that the rear side easily accessible, whereby the connection between the AV-system and the means for engaging and holding the AV-system on the chassis plate may be readily accessible.

Thirdly, the chassis plate (12) is fitted on the wall bracket (50) by passing the openings (60) over the flanges (56) allowing upper rims of the openings (60) to engage the flanges (56). At this stage any wires and/or cables are fitted in the wall bracket (50) or chassis plate (12) such that once the AV-system (2) is placed in the consoles (18) of the chassis plate (12), the wires and cables may easily be connected to the AV system (2).

Thereafter, the AV-system (2) may if necessary, be adjusted to the correct position by engaging the threaded bolt (40), finely adjusting the interface member (22) relative to the consoles (18,18'). After mounting of the AV-system (2) or just before, the cover plate (30) is positioned to cover the chassis plate (12). Furthermore, the AV-system may optionally be locked, by one or more releasable engagement locks (62), whereby the chassis plate (12) with the attached AV-system (2) is locked to the wall bracket (50);
In a further optional step pivoting the AV-system (2) into an installation position where cables and other wires may be connected to the rear side of the AV system;

In situations where the AV-system (2) is to be arranged on a substantially horizontal surface (1') the following method steps are carried out:
Firstly, connecting the means (24) for engaging and holding the AV-system (2) with the soundbar or screen engagement surface (88). This is similar to when mounting on a substantially vertical surface (1"). It may be desirable to adjust the correct position by engaging the threaded bolt (40), finely adjusting the interface member (22) relative to the consoles (18,18'). As the rear side of the AV-system is accessible when being mounted in an AV-bracket (10) according to the invention, it is not necessary to activate the pivoting ability of the AV-bracket (10). In fact, a pivoting lock may be installed, such that the ability to pivot in the hinge connections (20) is blocked. When pivoting the AV-system, the weight difference between the AV-system and the chassis plate (12) may cause the entire assembly to tumble forwards (away from the chassis plate).

Thereafter, the chassis plate (12) is arranged on the substantially horizontal surface (1'), such that the means (24) for engaging and holding the AV-system (2) points upwards. The wall bracket (50) which is not to be used when the AV-bracket is used for mounting an AV-system on a horizontal surface, may be arranged in the chassis plate (12).

### Item list

substantially horizontal surface (1')
substantially vertical surface (1")
AV system (2)
AV-bracket (10)
chassis plate (12)
front side (14) of the chassis plate (12)
back side (16) of the chassis plate (12)
consoles (18,18')
hinge connection (20)
interface member (22)
rear side (23) of the interface member (22)
means (24) for engaging and holding the AV-system (2)
axis (26)
cover plate (30)
threaded bolt (40)
bolt head (42)
wall bracket (50)
wall bracket front side (52)
wall bracket rear side (54)
flanges (56)
apertures (58)
openings (60)
releasable engagement lock (62)
soundbar (70) and/or screen
locking mechanism (72)
pivotable locking member (74), (74')
soundbar or screen top side (75)
soundbar or screen lower side (76)
button (78)
resilient means (80)
soundbar or screen rear side (82)
soundbar or screen front side (84)
soundbar or screen engagement surface (88)
recesses (92)
apertures (94)
opening (96)
notch (98)
plate (100)
first axle (102)
second axle (104)
spring (106)

## Claims

1. AV-bracket (10) for arranging an AV system (2) either on a substantially horizontal surface (1') or on a substantially vertical surface (1"), where said AV-bracket (10) comprises a chassis plate (12) having a front side (14) and a back side (16), said back side (16) in use intended to be facing the substantially horizontal surface (1') or the substantially vertical surface (1"), where on the front side (14) of the chassis plate (12) is provided at least one console (18) having a hinge connection (20) with an interface member (22), which interface member (22) has means (24) for engaging and holding an the AV-system (2).

2. AV-bracket according to claim 1 wherein the interface member (22) can pivot 90° +/- 5° around the hinge connection (20).

3. AV-bracket according to claim 1 wherein the hinge connection (20) defines an axis (26) parallel to the front side (14) of the chassis plate (12) around which the interface member (22) turns relative to the chassis plate (12), and where said axis (26) is distanced from the front side (14) of the chassis plate (12) by a distance x, where x is selected such that in use the AV-system (2) is distanced from the front side (14) of the chassis plate (12).

4. AV-bracket according to claim 1 where two consoles (18,18') are provided on the chassis plate (12) with a mutual distance, each console (18,18') being provided with a hinge connection (20) with an interface member (22), which interface member (22) has means (24) for engaging and holding the AV-system (2).

5. AV-bracket according to any preceding claim where a releasable locking mechanism (72) is provided between the interface member (22) and the console (18), such that when the locking mechanism (72) is engaged, the interface member (22) cannot pivot relative to the chassis plate (12) and when the locking mechanism (72) is released, the interface member (22) may pivot relative to the chassis plate (12).

6. AV-bracket according to any preceding claim where an adjustment mechanism is provided, where a threaded bolt (40) is arranged in a correspondingly threaded aperture in the console (18), where said bolt (40) has an end with a bolt head (42) accessible from the surface of the console (18) and an opposite distal end of the bolt (40) engaging the interface member (22), such that rotation of the bolt (40) causes the interface member (22) to pivot in the hinge connection (20), and where the adjustment mechanism is limited to allow the interface member (22) a pivot movement of +/- 5°.

7. AV-bracket according to claim 1 wherein a locking mechanism (72) is provided between the console (18) and the interface member (22), where said locking mechanism (72) comprises a pivotable locking member (74) urged by resilient means (80) into a locked position where the interface member (22) cannot pivot relative to the console (18) and a free position, where the pivotable locking member (74) is brought into the free position by sliding a button (78) accessible from the console (18) into the free position, in which position the interface member (22) may pivot relative to the console (18).

8. AV-bracket according to any of claims 1 to 4 wherein a combined locking and adjustment mechanism is provided, where the interface member (22) is provided with an opening (96), and a locking member (74') having a notch (98) is pivotably mounted on a plate (100) via a first axle (102), such that the notch (98) may be pivoted into the opening (96) or out of the opening (96), said locking member (74') is connected to a button (78) accessible from the outside, and the locking member (74') is further rotatably mounted about the first axle (102) on the plate (100), further the plate (100) is rotatably mounted about a second axle (104) and further the plate (100) is connected by a threaded engagement to the bolt (40) such that by rotating the bolt (40), the plate (100) will pivot around the second axle (104).

9. AV-bracket according to claim 8 where a spring (106) is arranged between the locking member (74') and chassis plate (12), urging the notch (98) into the opening (96).

10. AV-bracket according to any preceding claim where a cover plate (30) is provided, said cover plate (30) being adapted to cover the chassis plate (12), where in use the cover plate (30) is detachably connected to the chassis plate (12).

11. AV-bracket according to claim 1 where a wall bracket (50) is provided, said wall bracket (50) having a wall bracket front side (52) and a wall bracket rear side (54), which wall bracket rear side (54) in use is intended for being in contact with the substantially vertical surface (1"), where the wall bracket (50) has two flanges (56) extending from the wall bracket front side (52), in use intended to be bent extending away from the substantially vertical surface (1"), and where the wall bracket (50) has a plurality of apertures (58) for allowing screws/bolts to pass through the apertures (58) for fastening of the wall bracket (50) to the substantially vertical surface (1").

12. AV-bracket according to claim 11 where the flanges (56) of the wall bracket (50) may be in use are inter-fitted with openings (60) in the chassis plate (12), and where optionally a one or more releasable engagement locks (62) is/are provided, releasably locking the chassis plate (12) to the wall bracket (50).

13. AV-system comprising a soundbar (70) and/or a screen, where said soundbar (70) and/or screen has a soundbar or screen front side (84), a soundbar or screen rear side (82), a soundbar or screen top side (75), and a soundbar or screen lower side (76), and where an soundbar or screen engagement surface (88) is provided between and connecting the soundbar or screen rear side (82) and the soundbar or screen lower side (76), said soundbar or screen engagement surface (88) arranged at an angle of 45° with respect to the soundbar or screen lower side (76) and the soundbar or screen rear side (82), and where means for receiving the means (24) for engaging and for holding the AV-system (2) are provided on the interface member (22) according to any of claims 1 to 12, is provided.

14. AV-system according to claim 13 wherein two recesses (92) are provided in the soundbar or screen engagement surface (88) where further apertures (94) are positioned in the recesses (92) where the recesses (92) are spaced along the soundbar or screen engagement surface (88) adapted to receive and hold the means (24) for engaging and holding the AV-system (2) such that the interface member (22) is at least partly submerged in the recesses (92).

15. Method of mounting an AV-system in an AV-bracket according to any of claims 1 to 12, where:
a) in a first situation the AV-system (2) is to be arranged on a substantially vertical surface (1") the following method steps are carried out:
1. The wall bracket (50) is fastened to the substantially vertical surface (1") by means of bolts or screws, such that the flanges (56) are level and extending away from the substantially vertical surface (1");
2. connecting the means (24) for engaging and holding the AV-system (2) with the soundbar or screen engagement surface (88);
3. The chassis plate (12) is fitted on the wall bracket (50) by passing the openings (60) over the flanges (56) allowing upper rims of the openings to engage the flanges (56);
4. optionally locking, by one or more releasable engagement locks (62), the chassis plate (12) with the attached AV-system (2) to the wall bracket (50);
5. optionally pivoting the AV-system (2) into an installation position where cables and other wires may be connected to the rear side of the AV system;
6. optionally pivoting the AV-system into the correct position relative to the substantially vertical surface (1") and, if necessary, adjusting the correct position by engaging the threaded bolt (40), finely adjusting the interface member (22) relative to the consoles (18,18');
b) in a second situation the AV-system (2) is to be arranged on a substantially horizontal surface (1') the following method steps are carried out:
1. connecting the means (24) for engaging and holding the AV-system (2) with the soundbar or screen engagement surface (88);
2. the chassis plate (12) is arranged on the substantially horizontal surface (1');
3. if necessary, adjusting the correct position by engaging the threaded bolt (40), finely adjusting the interface member (22) relative to the consoles (18,18').
